# EUROPEAN PATENT APPLICATION

(11) **EP 4 644 249 A1**
(43) Date of publication of application: **05.11.2025**
(21) Application number: 24173592.7
(22) Date of filing: 30.04.2024
(51) Int. Cl.: B64D 13/00, B64D 13/08

(54) **METHOD AND SYSTEM FOR PROVIDING COOLING OF THE HOLD OF AN AIRCRAFT**

(71) Applicant: Airbus Operations GmbH, 21129 Hamburg (DE); Airbus S.A.S., 31700 Blagnac (FR)
(72) Inventor: Langediers, Jürgen, 21129 c/o Airbus, Hamburg (DE); Rainer, Hadamek, 21129 c/o Airbus, Hamburg (DE); Thomas, Jan, 21129 c/o Airbus, Hamburg (DE); Klockgether, Jörg, 31700 c/o Airbus, Blagnac (FR)
(74) Representative: Bird & Bird LLP - Hamburg

(57) **Abstract**

Described is a method for providing cooling to cargo (55) in the hold (40) of an aircraft (10). The method comprises providing a temperature-reactive cargo item (55) in the hold (40) of an aircraft (10), providing an alert condition associated with the temperature-reactive cargo item (55) corresponding to a need to cool said temperature-reactive cargo item (55) in the aircraft hold (40), identifying via a sensor arrangement (44) the alert condition within the aircraft hold (40), and cooling the aircraft hold (40) after identification of the alert condition.

## Description

Described is a method and a corresponding system for providing cooling to the hold of an aircraft.

Air freight has become commonplace, and plays a vital role in the supply chain in many industries. Air freight allows items to be delivered much more quickly than would be the case if delivered by, for example, ocean or rail freight. In many cases, the speed offered by air freight is advantageous for a convenience and/or practical point of view, but this is not the only reason that one might desire freight to be delivered as quickly as possible.

Delivering freight quickly may additionally have safety benefits. In cases where long periods of cargo being unsupervised should be avoided, for example due to the cargo being volatile or requiring monitoring for some reason, then the reduced freight time offered by air transport may be desirable.

Batteries, in particular lithium-ion (li-ion) batteries, are often desired to be transported globally because of their use in powering electrical devices from toothbrushes to mobile phones to vehicles. A li-ion (polymer) cell is an individual energy storage medium consisting of an anode and cathode with a separator in between. Electrolytic solution (liquid, gel or solid) may be used in the separation void between anode and cathode to allow flow of electrons. A li-ion (polymer) battery can contain several cells which are electrically connected to allow the flow of electrons. In some cases these terms can be interchangeable. Fire behavior characteristics described below refer to the cell level. While these batteries offer many benefits in terms of being rechargeable, long life and able to produce large volumes of power, they also contain volatile components that must be transported carefully. In some cases, for example where a battery is damaged during transit or production, malfunction can occur. This malfunction can result in the battery increasing in temperature, which can ultimately lead to an explosion, a fire, or both. Not only is this dangerous in itself, but it may also trigger damage to surrounding cargo. In the case where the surrounding cargo is other batteries (e.g. lithium batteries) a similar rise in temperature leading to an explosion and/or fire may be observed, resulting in a chain reaction. Other combustible cargo in the vicinity may also be affected, further increasing the fire hazard, and also the risk of dangerous smoke and/or vapours, accumulating in the cargo hold of the aeroplane. Current technology for transporting such combustible freight is to cover the freight with gel packs. In the case of a fire, these gel packs melt and release gel over the freight so as to extinguish the fire. The cargo and gel packs are positioned upon a pallet and are additionally covered by a fire containment cover so as to inhibit the spread of fire from the cargo, for example before the effect of the gel packs has been able to extinguish the fire.

This current technology is limited in its flexibility since cargo is only able to be transported that is able to be held under a fire containment cover. Where cargo is too large to fit under such a cover, either a second cover and pallet may be required for the additional cargo (which may require more valuable cargo space than is necessary), or other means of transport may need to be arranged. Further, in the case that there is damage to the cargo that causes it to catch fire, the lead time until the gel packs melt and release gel onto the cargo may require the presence of a fire, or at the very least a very high temperature condition, which may unnecessarily damage adjacent cargo that is also positioned under the fire cover.

There is therefore a need for a method that provides cooling in the hold of an aircraft that may be more flexibly used, and that may pose a reduced risk to other cargo in the hold.

The described method provides cooling to cargo in the hold of an aircraft, and comprises providing a temperature-reactive cargo item in the hold of an aircraft, providing an alert condition associated with the temperature-reactive cargo item corresponding to a need to cool said temperature-reactive cargo item in the aircraft hold, identifying via a sensor arrangement the alert condition within the aircraft hold, cooling the aircraft hold after identification (e.g. fulfilment) of the alert condition. The aircraft may be a freight aircraft.

In this case, temperature reactive cargo is cargo comprising a material that undergoes a chemical reaction that is initiated as a result of said material being at, or reaching, a specific (e.g. minimum reaction-) temperature. More specifically, temperature reactive cargo may be considered to be cargo comprising a material in which a chemical reaction is initiated as a result in a rise in the temperature thereof. In the case where the cargo is or comprises lithium-ion batteries or cells, the lithium-ion batteries or cells may be considered a temperature reactive cargo in that the lithium-ion batteries or cells being at an elevated temperature (e.g. experiencing a temperature increase to said temperature) may result in a chemical reaction, e.g. of the lithium-ions, in the batteries or cells. Further, an exothermic temperature reactive cargo may be cargo comprising a material that undergoes an exothermic chemical reaction that is initiated as a result of said material being at, or reaching a specific (e.g. a minimum reaction-) temperature. In the case of a lithium-ion battery, when a reaction-temperature is reached, an exothermic chemical reaction may occur inside the battery and therefore a lithium-ion battery may be considered to be an exothermic temperature reactive cargo.

The method may therefore be used to provide cooling to cargo in the hold of an aircraft upon the fulfilment of an alert condition, determined by the sensor arrangement. Determination of the need to cool the cargo, and the subsequent cooling of the cargo, may be determined at an early stage and therefore damage caused to the surrounding cargo may be reduced or eliminated. Further, the method requires no form restrictions to the cargo (e.g. such as a cover to be fitted over the cargo) and therefore may be used in combination with any type of cargo that is able to be fit into the hold of an aircraft.

The cooling of cargo in this sense involves a reduction in the temperature of the cargo and in some cases, for example where the cargo hold is already cooler than the cargo in the hold before the method of providing cooling takes place, the cooling of the cargo may be an increase in the rate of reduction of temperature of the cargo.

The temperature-reactive cargo item may be one or a plurality of lithium batteries or cells.

The alert condition may be or comprise an elevation in the level of hydrogen gas in the hold. The alert condition may be or comprise an elevation in the temperature (or of the rate of change, or increase, of the temperature) in the hold. The alert condition may be or comprise an elevation in the pressure (or of the rate of change, or increase, of the pressure in the hold) in the hold. The alert condition may be or comprise an elevated noise level in the hold. The alert condition may be or comprise an elevation in the level of volatile organic compounds (VOCs) in the hold. The alert condition may be any of the above in combination with another of the above, e.g. an elevated temperature in combination with an elevated hydrogen level, an elevated hydrogen level in combination with an elevated noise and pressure level, or the like. The alert condition may additionally rely on the level of hydrogen, temperature, pressure, noise being elevated for a minimum time period, e.g. to discount anomalous readings from a sensor in the sensor arrangement.

Where the alert condition is or comprises an elevation in the temperature, the alert condition may be considered to have been fulfilled when the temperature reaches a predetermined threshold. For example, the alert condition may be considered to have been fulfilled when the temperature reaches a predetermined absolute temperature, for example higher than 50 degrees Celsius, 70 degrees Celsius, 100 degrees Celsius, or the like.

In the case where the alert condition is or comprises an elevation in the level of hydrogen gas in the hold, fulfillment of the condition may result at a predetermined level of hydrogen (e.g. measured in parts per million (ppm) in the hold).

In the case where the alert condition is or comprises an elevated noise level, fulfillment of the alert condition may result in a noise detection above a predetermined decibel level. In some cases, fulfillment of the alert condition may result when a sudden increase in the noise level is detected, or when a sudden but short-lasting increase in the noise level is detected, for example such as a noise associated with a popping, bursting, rupturing event.

The method may comprise cooling the aircraft hold by providing a flow of cold air therein. The method may comprise activating an air conditioning system in the aircraft to provide a flow of cold air therein. The air conditioning system may be one that is commonly used in an aircraft, and therefore may be able to be fitted to aircraft relatively easily and cheaply. In case the same air conditioning system is already present in the aircraft, no additional air conditioning system may require to be fitted.

The method may comprise providing a source of the flow of cold air that is external to the aircraft. For example, when the aircraft is in flight, the temperature of the outside air may be significantly below that in the cargo hold. Therefore, a source of cold air may be readily available to the cargo hold if needed.

The method may comprise cooling the aircraft hold via depressurisation by opening a pressure communication channel between the aircraft hold and the exterior of the aircraft. Cooling via depressurisation may occur, or may exclusively occur, when the aircraft is airborne, and therefore the method may comprise making the aircraft airborne, or the method may be applied when the aircraft has an airborne flight condition. The pressure communication channel may be in the form of a section of piping or tubing that is in connection with the exterior of the aircraft, for example has an outlet on or near the fuselage of the aircraft. The outlet may be selectably opened and closed, e.g. by a user, so as to permit or prevent depressurisation of the aircraft hold. In the case where the aircraft hold is depressurised, the aircraft may be a freight aircraft. In the case of a freight aircraft, depressurisation may be particularly effective due to the effects thereof being quick and far-reaching. The depressurisation may be a partial or a full depressurisation, i.e. the pressure inside the hold may be brought (e.g. reduced) to, or as close to as possible, the pressure outside of the aircraft (full depressurisation), or may be brought (e.g. reduced) to an intermediate pressure between the original pressure inside the aircraft and the pressure outside the aircraft (partial depressurisation). Pressurisation may be done to the extent that the temperature within the aircraft hold is kept at or lower than a predetermined temperature. As such initially a partial depressurisation may be effected to lower the temperature inside the aircraft hold, and a full depressurisation may be subsequently effected, for example in the case that the temperature inside the hold continues to rise.

The method may comprise cooling the aircraft hold by a release of cooling medium inside the hold of the aircraft. The cooling medium may be in the form of a cooling liquid or gel. Alternatively or additionally, the cooling medium may be in the form of a gas (e.g. nitrogen gas), a spray of e.g. non-flammable liquid, etc.. The cooling medium may be actively cooled before being released into the cargo hold (e.g. by being held in an area of the aircraft that is cold, for example near the exterior skin of the aircraft, or that is cooled, e.g. by the air conditioning) and/or the cooling medium may provide chemical cooling, for example by an endothermic reaction and/or may have a high thermal capacity. The cooling medium may be applied directly onto the temperature-reactive cargo item within the aircraft hold. The described methods may be used alone or together. In some cases, the cooling methods may have a synergistic effect on each other, for example a cooling medium may improve the rate of heat transfer from the cargo, while an air conditioning unit may provide a cooler environment that is better able to take advantage of the increased heat transfer properties of the cargo. Further, accessing cool air from outside the aircraft may reduce the load required of an air conditioning unit, as the air may have less or no need to be cooled before being introduced into the cargo hold.

The method may comprise identifying via a sensor arrangement a fire condition with the aircraft hold that is indicative of the presence fire, and in particular the presence of a lithium fire. Herein, a lithium fire is a fire that is caused by the overheating of a lithium-ion cell, and may be characterised by any or all of an increase in the level of hydrogen (e.g. preceding and/or during the lithium fire), an increase in the level of VOCs, short and sharp increases in the noise level in the hold, a particularly rapid increase in temperature within the hold that is associated with the burning of lithium-ion cells, or the like. For example, the method may comprise providing a carbon monoxide or a smoke sensor, e.g. in the cargo hold, that indicates that there is a fire in the cargo hold. The fire condition may be met by the presence of carbon dioxide in the hold, or smoke being detected in the environment of the hold. The fire condition may alert a user to the fact that the point of no return has been reached, and that further measures should be taken in order to address the problem of a fire in the cargo hold, e.g. that are not simply measures taken to cool the cargo in the hold, but to extinguish a fire in the hold. In the case that a lithium fire is detected and the fire condition is met, the fire may be identifiable via the sensor arrangement specifically as a lithium fire.

The method may comprise providing a notification inside the aircraft (e.g. at least one of the cockpit and main deck of the aircraft) as to whether the alert condition is met and providing notification inside the aircraft (e.g. the cockpit, main deck of the aircraft) as to whether the fire condition is met (e.g. as to whether a lithium fire is present). As such, a user may be able to know whether the method of cooling the cargo hold of the aircraft is necessary, or whether further steps are necessary, for example to extinguish a fire.

The method may comprise providing a request inside the aircraft (e.g. the cockpit, main deck etc. thereof) for permission to effect the step of cooling the aircraft hold upon identification of the alert condition. For example, the request may be in the form of a confirmation to a user (e.g. a pilot, a flight attendant a member of the air crew, etc.) that the alert condition is met, and cooling of the cargo should be effected. Such a procedure may be beneficial in cases where, for example, there is a mixture of cargo that may also give rise to, for example, a rise in temperature of the hold, and therefore further checks may be required before making a decision to cool the hold of the aircraft.

The sensor arrangement comprises at least one of: a heat sensor, a hydrogen sensor, an acoustic sensor, a pressure sensor, a VOC sensor. The sensor arrangement may comprise all or a combination of the aforementioned. The sensor arrangement may comprise multiple of the aforementioned.

An aspect relates to an aircraft comprising a system for cooling the hold of an aircraft. The system comprises a sensor arrangement located inside the hold of the aircraft, the system comprising at least one sensor for detecting an alert condition inside a hold of the aircraft, and a cooling means for providing cooling to the hold of the aircraft after detection of the alert condition inside the hold of the aircraft.

The cooling means may comprise a vent in the wall of the aircraft hold. The vent may be configurable between a closed configuration in which fluid communication between the aircraft hold and the aircraft exterior is restricted, and an open configuration in which fluid communication between an aircraft hold and the aircraft exterior is permitted. As such, the vent may be opened to allow depressurization and/or exchange of air in the cargo hold with air exterior to the aircraft.
- Figure 1: is an illustration of an aircraft;
- Figure 2: is a graph showing a temperature profile of a cell casing over time;
- Figure 3: is a schematic illustration of a cargo hold of an aircraft;
- Figure 4: is a further schematic illustration of a cargo hold;
- Figure 5: is a more detailed schematic view of a cargo hold showing possible cooling mechanisms.

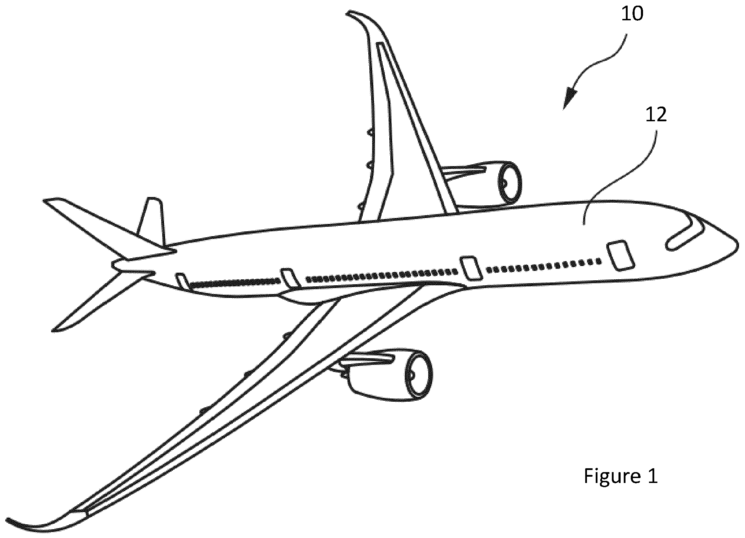

An aircraft 10 is shown in Figure 1 comprising a fuselage 12. A cargo hold is contained within the fuselage 12, and may be used to hold air freight, which is cargo that is to be transported by air. In particular, the air freight may be or comprise temperature-reactive cargo which may be required to be cooled, as will be described.

An example of a temperature-reactive cargo is a battery, for example a lithium-ion battery or a lithium-ion cell. Lithium-ion batteries are known to produce heat if damaged. The heat produced can cause further damage to the battery, leading to more heat being produced and a thermal runaway process, ultimately leading to destruction of the battery, and possibly a fire and/or explosion thereof.

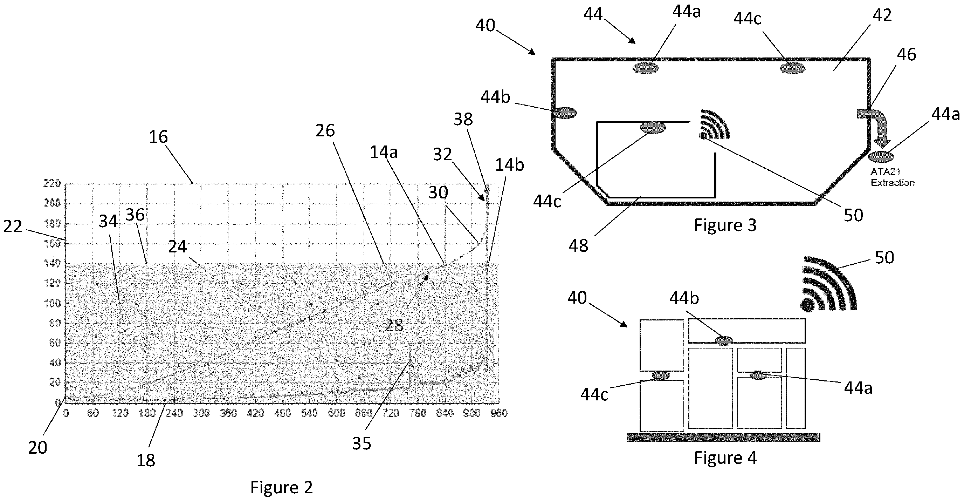

Figure 2 provides an example of a thermal runaway curve 14a that roughly corresponds to that of a cell of a lithium-ion battery, as well as a secondary curve 14b illustrating an air temperature in the vicinity of the lithium-ion battery. Here the curve 14a is shown on a graph 16 having an X-axis 18 showing minutes from an event 20 and a Y-axis 22 showing temperature of the lithium-ion cell.

As can be seen on the graph 16, the runaway curve 14 begins an event 20, which may be a heat generation event in the vicinity of the lithium-ion battery such as a nearby cell or battery being damaged, e.g. punctured, crushed, scraped, incorrectly packaged or the like, causing heat to be generated within this nearby battery, and thus heating the cells and/or batteries in the vicinity. An initial linear increase in temperature 24 can be seen immediately after the event 20. The linear increase in temperature may depend on the proximity of the heat generator (e.g. the damaged cell and/or battery) to the cell, the temperature of which is being measured. Here, the temperature increase is approximately 10°C per minute, but in other examples the linear increase in temperature may be an increase of higher than 10°C per minute, between 3°C and 10°C per minute, between 3°C and 8°C per minute, between 4°C and 7°C per minute, between 5°C and 6°C per minute, 5°C per minute, 6°C per minute or the like.

After some increase in temperature (in this case an increase in temperature to approximately 120°C), the cell may begin to vent, or otherwise described an outgassing process may occur. Cell venting is described on the curve 14 by point 26 which illustrates the start of the process of cell venting. As is illustrated, the start of the outgassing process is accompanied by a brief drop in temperature, before the temperature begins to rise again. Here, the rise in temperature is non-linear, in contrast to the initial linear increase in temperature 24, although may comprise a generally linear portion so as to comprise an initial second moderate temperature increase 28 after the cell venting point 26. While the initial temperature increase is, in this example, driven by external heating of the battery or cell, the subsequent increases in temperature are driven (at least partially) by a chemical reaction inside the battery or cell. The second temperature increase 28 may correspond to further venting from the cell as the temperature thereof increases, and changes within the cell may additionally result in an internal short circuit within the cell, which may cause further damage to the cell and may give rise to a further increase in temperature of the cell. In the case of lithium-ion batteries, the gas that is vented from the cell may be or contain hydrogen gas, for example may be mainly (over 50%) composed of hydrogen gas, and may also contain VOCs.

As the temperature of the cell continues to increase in line with the second linear temperature increase 28, eventually a "point of no return" 30 is reached at which the rate of increase of the temperature of the cell significantly increases. This sharp increase in the rate of increase of the temperature is known as thermal runaway 32 and is illustrated on the curve 14 by the line extending upwards on the graph 16. Due to the sharp increase in temperature in a very short time scale, it is believed that reversal of the process of heating in the battery is no longer feasible, hence the start of this process being known as the point of no return 30. As can be seen, the point of no return 30 occurs in this case at approximately 160°C and occurs after around 15 minutes from the event 20, although this timing will depend on the initial rate of increase in temperature 24 of the cell or battery. After the point of no return 30, the subsequent increase in temperature from 160 to a much higher temperature (for example, in excess of 800°C) occurs within the space of roughly 3 minutes, i.e. at a much higher rate. An additional information point 38 is also illustrated which may correspond to a smoke point 38, at which temperature the cells may begin to produce smoke, and even catch fire thus resulting in fire damage (as well as heat damage) to the surrounding cargo. Here, the smoke point is included on the curve 14a for illustrative purposes only, and in reality may occur at a higher temperature, than can be illustrated here, for example at 400°C. Due to the sharp increase in temperature, the smoke point 38 may be reached very shortly after the point of no return 30. At the smoke point 38 point, the increase in temperature of the cells may be detectable by a fire alarm. However, as is clear from the graph, this traditional method of detecting fire would not be sufficient to prevent thermal runaway from occurring since it is already past the point of no return 30 on the curve 14.

Further illustrated on the graph 16 is a recovery zone 34. The recovery zone 34 illustrates a region in which reversal, or at least containment, of the heating process of the cell may be achievable. Since the heating of the cell gives rise to a runaway process in which the elevated temperature of the cell gives rise to yet further heating, cooling of the cell may be used in order to inhibit this runaway process. The recovery zone 34 represents the maximum recovery temperature 36 at which reaching the point of no return 30 may be avoided by providing cooling to the cell. When cooling is provided to the cell, the temperature of the cell is reduced thereby inhibiting the runaway thermal process. Once the temperature of the cell reaches a level that is higher than the maximum recovery temperature (which in this case is approximately 140°C), cooling of the cell may not be sufficient to prevent the temperature of the cell reaching that of the point of no return 30, at which point irreversible thermal runaway may occur. While the recovery temperature 36 is illustrated here at 140°C, it should be noted that this temperature may vary depending on the exact nature of the batteries or cells in question. It is therefore of high importance to be able to identify heating of a cell or battery while the temperature thereof remains in the recovery zone 34, such that cooling of the cell remains an effective means of preventing thermal runaway and thereby avoiding the incidence of a fire occurring in the hold of the aircraft.

As can be seen by the secondary graph 14b, the air temperature increases in temperature in line with the increase in temperature of the battery or cell, with a particularly notable increase in temperature occurring slightly after the outgassing of the batteries or cells at point 26, which is in contrast to the reduction in temperature of the cell. Due to this sharp, but brief, temperature increase 35, the outgassing (and therefore the start of the chemical reaction in the cell leading to temperature runaway) may be detected based on an increase in the air temperature in the vicinity of the cell/battery.

A schematic example of a cargo hold 40 of an aircraft is illustrated in Figure 3. Here, the cargo hold 40 may be considered to be a large volume 42 in which cargo may be stored in an aircraft. The aircraft may be an aircraft that is specifically intended to hold cargo, or may be an aircraft that additionally is able to carry passengers. The cargo hold 40 comprises a sensor arrangement 44, which comprises a number of sensors. The sensors may be all the same type of sensors, or may be different sensors (e.g. at least one sensor may be a different sensor). In this example, the sensor arrangement 44 comprises hydrogen sensors 44a, acoustic sensors 44b and temperature sensors 44c. In some examples, a pressure sensor may also be present, for example in instances where the hold 40 is sealed so as to be airtight, or substantially airtight. In such cases, the venting from the cells may give rise to an increase in pressure in the hold 40, which may be detectable by the pressure sensor. In some other examples, a VOC sensor may alternatively or additionally be present.

A hydrogen sensor 44a may be used to detect hydrogen which is indicative of a battery (e.g. a lithium-ion cell) having been damaged and experiencing an increase in temperature. An acoustic sensor 44b may be used to detect the sound of bursting of the cell housing which may be caused, for example, due to an accumulation of gas within the cell housing due to the cell beginning to vent. A temperature sensor 44c may be used to measure a rise in temperature of a cell or of the surrounding air temperature of the cell, while a pressure sensor (not illustrated) may be used to detect an increase in pressure inside a cargo hold, e.g. as a result of the cells venting.

As can be seen, the sensor arrangement 44 comprises a number of sensors in this example, although it should be noted that in some examples, the sensor arrangement 44 may only comprise a single sensor. A sensor, or sensors, from the sensor arrangement may be placed on the walls of the cargo hold 40, and/or may be placed on the roof of the cargo hold 44, e.g. such that the sensor is located inside the hold, as shown in Figure 3. A sensor placed on the wall may be a hydrogen sensor, acoustic sensor, heat sensor or pressure sensor, as may a sensor places on the roof of the hold 40.

The cargo hold 40 additionally comprises a gas extraction point 46. The gas extraction point may be in the form of an outlet pipe or vent. The gas extraction point 46 may additionally comprise a fan or air pump to enable gas to be pumped from the gas extraction point 46 and out of the cargo hold 40. A sensor 44a (or sensors) may be positioned at or adjacent the gas extraction point 46 such that the gas inside the hold 40 may be blown or pumped over the sensor and an analysis of gas may be provided by the sensor (e.g. as to whether the gas contains hydrogen, or as to the temperature of the gas). In some examples, more than one sensor (e.g. more than one type of sensor) may be positioned in or adjacent the extraction point 46 so as to provide multiple sources of information as to the gas that is being extracted (e.g. the temperature and hydrogen content).

Here, a sub-compartment 48 is provided inside the cargo hold 40. Inside the sub-compartment 48 may be located further cargo. The sub-compartment 48 may assist to isolate the cargo provided therein from the remainder of the hold 40. For example, if the cargo therein is known to be particularly volatile, then the sub-compartment 48 may be used to house this cargo. In this example, a temperature sensor 44c is located inside the sub-compartment 48. Since the sub-compartment 48 is smaller in volume, a temperature sensor 44c may be more easily able to monitor the temperature within the sub-compartment, and changes (e.g. increases in temperature) to the cargo inside the sub-compartment may more quickly result in an increase in the surrounding temperature (e.g. in the temperature of the surrounding air or environment), which may therefore be more quickly identified by the temperature sensor 44c. The sub-compartment 48 may comprise a transmitter 50 which may be used to transmit data provided by the sensor arrangement 40 located inside the sub-compartment 48. The transmitted data may be received by a receiver (not shown) which may be in communication with a controller, or with a control panel which may display the data from the sensor arrangement 40 in some way to a user. In some cases, the sub-compartment 48 may be hermetically sealed in the cargo hold 40, such that the environment inside the sub-compartment 48 is different to that inside the cargo hold 40. In some examples, the sub-compartment 48 may be used to contain temperature-reactive cargo (e.g. volatile cargo). In this way, should a fire or extreme rise in temperature occur as a result of the temperature-reactive cargo, the remainder of the cargo positioned outside of the sub-compartment 48 may be protected. The sub-compartment 48 may therefore comprise a degree of fire protection therein.

Figure 4 illustrates an alternative arrangement of cargo inside a cargo hold 40. Here, all or some of the cargo inside the cargo hold 40 may be temperature-reactive, and sensors 44a-c of the sensor arrangement 40 may be positioned between the cargo (e.g. the items of cargo). The sensors 44a-c in this arrangement may be able to be positioned by a user (e.g. they may be portable sensors, and may not be fixed to a point in the cargo hold 40).

In some examples, the sensors may be wireless sensors, such that they are wirelessly connected to a receiver, while in other examples, the sensors may be connected by wires to a central transmitter 50, which may then transmit to a receiver. The receiver may then relay the information to a control unit or display for a user, where action may be taken if necessary.

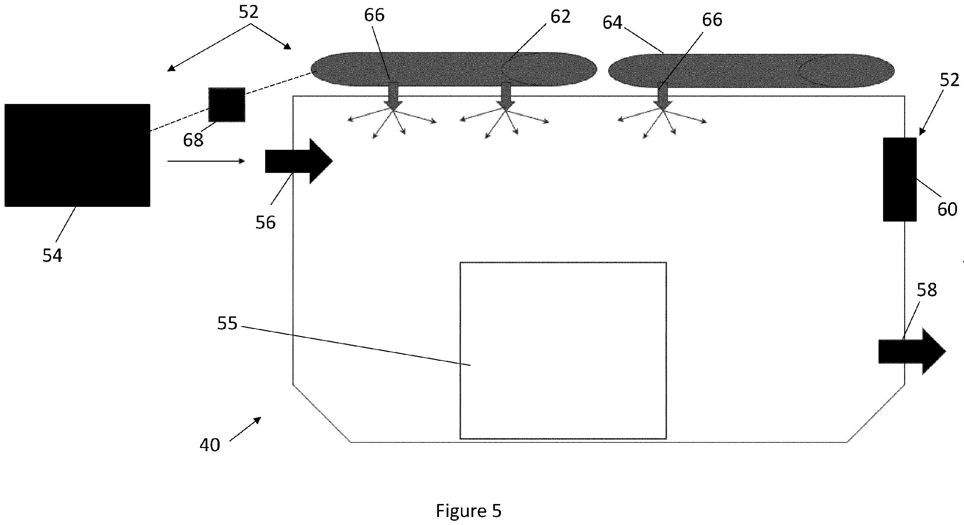

Figures 3 and 4 therefore illustrate how a change in temperature of temperature-reactive cargo can be detected without having to rely on the detection of smoke which, as we know from Figure 2, provides detection too late to allow effective cooling. Instead, the sensor arrangement 44 may be used to determine if the value of a certain parameter or parameters has reached a high level such that an alert condition is realised. The alert condition may correspond to a minimum detected level of hydrogen, a minimum detected increase in the temperature (or rate of increase in the temperature) in the cargo hold 40, or in the vicinity of the cargo, a minimum detected increase in the pressure (or rate of increase of the pressure) inside the cargo hold 40, or the detection of a decibel increase inside the cargo hold 40 that may be indicative of a bursting or exploding of a battery or cell, for example a short and sharp increase in the decibel level inside the cargo hold 40. The alert condition (e.g. the maximum acceptable level of hydrogen in the hold, maximum temperature increase or rate of temperature increase, etc.) may be programmed into a control unit, which may then either display an alert to a user (e.g. in the form of a message, flashing light, alarm sound, etc. in the aircraft such as in the cockpit or main deck) or may activate the cooling means (as is described in relation to Figure 5) so as to provide cooling inside the cargo hold. Alternatively, the alert condition may be known to a user (e.g. a flight attendant, pilot etc.) and whether or not the alert condition has been fulfilled may be determined by a user, e.g. based on data provided from the sensor arrangement 40 to the user (e.g. the ambient level of hydrogen, temperature, pressure in the hold, the ambient sound level, etc.).

In some examples, the sensor arrangement 44 may additionally be used to identify a fire condition, in particular a lithium fire condition. The fire condition may be indicative of a fire, or an imminent fire, in the cargo hold. For example, the sensor arrangement 44 may comprise a smoke detector and/or a carbon monoxide detector 44 that may detect the presence of a fire in the cargo hold 40. This may alert the user to the fact that different action should be taken that is appropriate to combat a fire in the hold, rather than simply trying to cool the cargo in the hold.

In Figure 5, various cooling means 52 are provided for providing cooling to cargo in the hold of an aircraft. Cargo 55 is illustrated schematically inside the hold. While various means are illustrated in Figure 5, it should be noted that not all may be required to be present. For example, only one of the cooling means 52 illustrated in Figure 5 may be present in the hold of an aircraft, or alternatively two of the illustrated cooling means 52 may be present. In the example of Figure 5, three cooling means 52 are present.

One illustrated cooling means comprises an air conditioning unit 54. The air conditioning unit 54 may form part of a larger air conditioning system, which comprises an air inlet 56 (or at least one air inlets) and an air outlet 58 (or at least one air outlet) through which cooled air from the air conditioning unit may be flowed. In particular, cooled air may flow from the air inlet 56, through the cargo hold of the aircraft and then exit through the outlet 58. The air conditioning unit 54 may be the same air conditioning unit 54 that is used to condition air in the cabin, main deck, cockpit, etc. of the aircraft, or alternatively may be a dedicated air conditioning unit 54 that is used specifically for cooling the cargo in an aircraft. The positioning of the inlet 56 and outlet 58 may be selected so as to maximise the exposure of the cargo in the hold 40 to the cooled air as possible. For example, the inlet 56 may be positioned towards or at the top of the hold, while the outlet may be positioned at the bottom 58 of the hold, as in Figure 5.

Another cooling means may be a vent 60 to the exterior of the aircraft. Although illustrated as being separate from the inlet 56 and outlet 58, the vent may be the same as, or comprise, either or both of part or all of the inlet and outlet 58. The vent 60 may be configurable to be in communication (e.g. fluid communication) with the exterior of the aircraft. Where the vent 60 is or comprises either of the inlet 56 or outlet 58, then either or both of the inlet 56 and outlet 58 may be configurable to be in fluid communication with the exterior of the aircraft. The vent 60 may fluidly connect the volume inside the hold of the aircraft with the exterior of the aircraft, for example by comprising a pressure communication channel in the form of a section of piping. The vent 60 may comprise a valve therein, which may be openable and closeable to configure the vent 60 between permitting fluid communication with the exterior of the aircraft, and preventing or restricting fluid communication with the exterior of the aircraft. The valve may be operable by a user (e.g. remotely operable), and may be operable from within (e.g. the cockpit, main deck, cabin, etc. of) the aircraft, for example by a flight attendant, a pilot, a technician, or the like.

When the vent is configured to the open configuration in which fluid communication between the aircraft hold 40 and the exterior of the aircraft is permitted, the pressure of the hold 40 may then reduce, for example to the pressure at the exterior of the aircraft, or approximately equal to the pressure at the exterior of the aircraft. In addition to the reduction in pressure, configuring the vent to the open configuration may additionally lower the temperature inside the hold 40 of the aircraft, for example as a result of the inflow of cold air from the exterior of the aircraft. This lowering of the temperature has the effect of cooling the cargo 55 therein, thereby preventing the temperature of the cargo 55 reaching the point of no return (see Figure 2).

The default and/or normal operational position of the valve 60 may be the closed position, and the valve 60 may be configured to an open position by a user e.g. in the aircraft such as in the cockpit, main deck, etc..

A further cooling means illustrated is in the form of a source of cooling medium 62, such as a cooling gel, liquid or other cooling substance. Here, the cooling medium 62 is stored in a container or containers 64 that are positioned above the cargo hold 40. However, it should be noted that the containers 64 could also be positioned to the side or even below the cargo hold 40. The containers 64 are in fluid communication with the cargo hold 40, for example via a section of piping (optionally including a manifold) that may terminate in an inlet into the cargo hold 40. Optionally, the outlet 66 from the containers 62 may comprise a flow direction means, such as a nozzle or a spreader, to direct the flow of cooling medium 62 as desired in the hold 40. For example, a spreader may function to guide flow of the cooling medium in a plurality of directions such that a flow of cooling medium 62 covers the entire (or a large area of) the cargo hold 40. Alternatively, a nozzle may direct the flow of cooling medium 62 towards a location in the hold 40 that is known to have temperature-reactive cargo, e.g. one side of the hold 40 or the middle of the hold 40. The container or containers 64 may comprise one outlet, as is shown in the container 64 on the right of Figure 5, or may comprise a plurality of outlets 66, as is illustrated in the container on the left of Figure 5.

In the case that the sensor arrangement (see Figures 3 and 4) detects, for example, an elevated level or concentration of hydrogen and/or heat and/or pressure and/or concentration of VOCs in the cargo hold 40, and/or a sound indicative of the bursting or exploding of a cell due to gassing therein, then the cooling means (e.g. any or all of the described cooling means) may be deployed in order to reduce the temperature of the temperature-resistant cargo such as batteries (e.g. lithium ion batteries) to prevent overheating thereof, as has been described. In some cases, rather than (or as well as) the sensor arrangement detecting an elevated level or concentration of hydrogen, heat, pressure, VOCs, the sensor arrangement may detect a minimum Activation of the cooling means may be via a control means 68. For clarity 68, the control means shown in Figure 5 is only in communication with two of the cooling means 54, 64. However, it should be understood that the control means 68 may be in communication with one, any or all of the cooling means 52, 54, 64.

The control means 68 may receive information from all the sensor arrangement 44, and may use this information to determine whether an alert condition has been met. If no alert condition has been met, then control means 68 may simply continue to receive information from the sensor arrangement 44. If the alert condition has been met, then the control means 68 may be able to independently make the decision to provide cooling to the cargo hold 40, or may provide a user (e.g. a pilot, flight attendant, or the like) with a prompt to advise that the alert condition has been met and the cargo hold 40 should be cooled. The control means 68 may additionally be able to actuate the cooling means. Alternatively, no control means 68 may be provided and the data from the sensor arrangement 44 may be provided directly to a user. In this case, the user may be able to decide (e.g. calculate) themselves whether the alert condition has been met and whether cooling of the cargo hold is necessary.

### Summary of Reference Numerals

| | | | |
|---|---|---|---|
| Aircraft | 10 | Outlet | 66 |
| Fuselage | 12 | Control means | 68 |
| Runaway curve | 14 | | |
| Graph | 16 | | |
| X-axis | 18 | | |
| Event | 20 | | |
| Y-axis | 22 | | |
| Initial increase in temp. | 24 | | |
| Cell venting | 26 | | |
| Second increase in temp. | 28 | | |
| Point of no return | 30 | | |
| Thermal runaway | 32 | | |
| Recovery zone | 34 | | |
| Air temperature increase | 35 | | |
| Recovery temperature | 36 | | |
| Smoke point | 38 | | |
| Cargo hold | 40 | | |
| Cargo volume | 42 | | |
| Sensor arrangement | 44 | | |
| Hydrogen sensor | 44a | | |
| Acoustic sensor | 44b | | |
| Temperature sensor | 44c | | |
| Gas extraction point | 46 | | |
| Sub-compartment | 48 | | |
| Transmitter | 50 | | |
| Air conditioning unit | 54 | | |
| Cargo | 55 | | |
| Air inlet | 56 | | |
| Air outlet | 58 | | |
| Vent | 60 | | |
| Cooling medium | 62 | | |
| Containers | 64 | | |

## Claims

1. A method for providing cooling to cargo (55) in the hold (40) of an aircraft (10), comprising:
providing a temperature-reactive cargo item (55) in the hold (40) of an aircraft (10);
providing an alert condition associated with the temperature-reactive cargo item (55) corresponding to a need to cool said temperature-reactive cargo item (55) in the aircraft hold (40);
identifying via a sensor arrangement (44) the alert condition within the aircraft hold (40);
cooling the aircraft hold (40) after identification of the alert condition.

2. The method for providing cooling according to claim 1, wherein the temperature-reactive cargo item (55) is a plurality of lithium cells.

3. The method for providing cooling according to claim 1 or 2, wherein the alert condition comprises an elevation in the level of at least one of hydrogen gas or VOCs in the hold (40).

4. The method for providing cooling according to any preceding claim, wherein the alert condition comprises an elevation in the temperature in the hold (40).

5. The method for providing cooling according to any preceding claim, comprising cooling the aircraft hold (40) by providing a flow of cold air therein.

6. The method for providing cooling according to claim 5, comprising activating an air conditioning system (54) in the aircraft (10) to provide a flow of cold air therein.

7. The method for providing cooling according to claim 5 or 6, wherein the source of the flow of cold air is external to the aircraft (10).

8. The method for providing cooling according to any preceding claim, comprising cooling the aircraft hold (40) via depressurisation by opening a pressure communication channel between the aircraft hold (40) and the exterior of the aircraft (10).

9. The method for providing cooling according to any preceding claim, comprising cooling the aircraft hold (40) by a release of cooling gel inside the hold of the aircraft (10).

10. The method for providing cooling according to any preceding claim, comprising identifying via a sensor arrangement (44) a fire condition with the aircraft hold (40) that is indicative of the presence of a lithium fire, and comprising providing notification inside the aircraft (10) as to whether the alert condition is met and providing notification inside the aircraft as to whether the fire condition is met.

11. The method for providing cooling according to any preceding claim, wherein the cargo is exothermic temperature reactive cargo.

12. The method for providing cooling according to any preceding claim, comprising providing a request inside an aircraft (10) for permission to effect the step of cooling the aircraft hold (40) upon identification of the alert condition.

13. The method for providing cooling according to any preceding claim, wherein the sensor arrangement (44) comprises at least one of: a heat sensor, a hydrogen sensor, an acoustic sensor, a pressure sensor, a VOC sensor.

14. An aircraft (10) comprising a system for cooling the hold of an aircraft (40), the system comprising:
a sensor arrangement (44) located inside the hold of the aircraft (40), the system comprising at least one sensor for detecting an alert condition inside a hold of the aircraft (40);
a cooling means for providing cooling to the hold of the aircraft (40) after detection of the alert condition inside the hold of the aircraft (40).

15. The aircraft of claim 14, wherein the cooling means comprises a vent (60) in a wall of the aircraft hold (40), the vent (60) configurable between a closed configuration in which fluid communication between the aircraft hold (40) and the aircraft exterior is restricted, and an open configuration in which fluid communication between an aircraft hold (40) and the aircraft exterior is permitted.
